# EUROPÄISCHE PATENTSCHRIFT

(11) **EP 3 587 221 B1**
(45) Veröffentlichungstag und Bekanntmachung des Hinweises auf die Patenterteilung: **28.10.2020**
(21) Anmeldenummer: 19192080.0
(22) Anmeldetag: 25.06.2012
(51) Int. Cl.: B62D 21/11, B62D 21/17, B62D 29/00, B62D 29/04, B60G 3/18, B60K 1/02

(54) **ACHSTRÄGER MIT INTEGRIERTER TRÄGER FÜR EINEN ANTRIEB**
AXLE SUPPORT WITH INTEGRATED SUPPORT FOR A DRIVE UNIT
SUPPORT D'ESSIEU AVEC SUPPORT POUR UNITÊ D'ENTRAÎNEMENT

(30) Priorität: 05.07.2011 DE 102011106758; 25.11.2011 DE 102011119342
(43) Veröffentlichungstag der Anmeldung: 01.01.2020
(62) Teilanmeldung aus: 12742787.0
(73) Patentinhaber: KSM Castings Group GmbH, 31137 Hildesheim (DE)
(72) Erfinder: Buschjohann, Thomas, 31171 Norstemmen (DE); Kiesel, Andreas, 09380 Thalheim (DE)
(74) Vertreter: Patentanwälte Thömen & Körner

(56) Entgegenhaltungen:
- EP-A1- 1 050 449
- CN-A- 101 484 328
- DE-A1-102009 015 414
- DE-A1-102011 012 249
- DE-B3-102007 047 402
- DE-U1-202008 017 274
- US-A1- 2004 222 030

## Beschreibung

Die Erfindung bezieht sich auf einen Achsträger, insbesondere einen Hinterachsträger eines Kraftfahrzeugs, für eine Mehrlenkeraufhängung der Räder.

Solche Achsträger, die auch unter anderen Bezeichnungen, wie Achs- oder Fahrschemel, Integralrahmen oder Hilfsrahmen, bekannt sind, werden, nachdem sie mit Aggregaten bzw. Hilfsaggregaten versehen sind, als vormontierte Einheiten oder Module an Fahrzeugaufbauten, zum Beispiel an der Karosserie und/oder an Längsträgern eines Fahrzeuges befestigt.

Ein gattungsgemäßer Achsträger ist außerdem in der CN101484328A offenbart.

Der Erfindung liegt die Aufgabe zugrunde, einen Achsträger aufgrund von Montage-, Karosseriebelastungs-, Komfort- und Steifigkeitsanforderungen vielseitiger auszubilden. Der Erfindung liegt außerdem die Aufgabe zugrunde, einen Achsträger mit verbesserten fahrdynamischen Eigenschaften und verbesserten Komfort- und Akustikeigenschaften auszubilden. Der Erfindung liegt außerdem die Aufgabe zugrunde, einen Achsträger korrosionsunempfindlicher, besser verarbeitbar sowie kostengünstiger und einfacher herstellbar zu machen. Zudem soll ein Achsträger der eingangs genannten Art derart weiterentwickelt werden, dass das Gewicht bei möglichst gleichzeitig höherer Belastbarkeit vergleichsweise verringert wird. Zudem soll eine kompaktere Gesamtkonstruktion des Achsträgers erhalten werden. Weiterhin soll eine Achse, vorzugsweise eine Hinterachse, mit einem Achsträger bereit gestellt werden, welche in vorteilhafter Weise antreibbar ist. Der Achsträger soll so ausgebildet sein, dass die Montage und Wartung sowie Reparatur erleichtert wird. Der Achsträger soll eine ausreichende Festigkeit an den Anbindungspunkten aufweisen und Dauerbelastungen aushalten. Er soll hohe Anforderungen an Steifigkeiten, Eigenfrequenzen und Crashverhalten erfüllen, möglichst leicht sein, mit möglichst wenigen Einzelteilen sowie möglichst wenigen Schweißnähten kostengünstig herstellbar sein, möglichst viele Fahrwerkkomponenten erfassen und deren Einstellungen ermöglichen, möglichst wenig Bauraum in Anspruch nehmen, die Weiterleitung von Geräuschen, insbesondere Fahrbahngeräuschen, und Schwingungen, insbesondere Radschwingungen dämpfen, und einen leichten Ein- und Ausbau ermöglichen.

Erfindungsgemäß wird wenigstens eine dieser Aufgaben mit einem Achsträger, gemäß Asnpruch 1 gelöst.

Der Achsträger selbst kann vorteilhaft einen Grundkörper aufweisen, der rahmenartig, insbesondere mit Versteifungsstreben, oder mit einer weitgehend geschlossenen, nur mit den erforderlichen Ausnehmungen bzw. Aufnahmen zur Befestigung/Lagerung von Fahrwerkskomponenten versehenen Grundfläche ausgebildet sein kann.

Der Achsträger der Erfindung umfasst zwei Längsträger die über wenigstens einen Querträger miteinander verbunden sind, wobei an jedem Längsträger eine Aufnahmevorkehrung angeordnet ist.

Zweckmäßigerweise können die zwei Längsträger über zwei Querträger zur Ausbildung eines rahmenartigen Achsträgers verbunden sind. Es kann vorteilhaft sein, wenn die Längsträger mit den Querträgern einstückig ausgebildet sind. Es kann aber auch vorteilhaft sein, wenn die Längsträger mit den Querträgern über andere Fügeverfahren, insbesondere durch Schweißen, miteinander verbunden sind.

Es kann zweckmäßig sein, wenn zumindest ein Querträger mindestens eine Aufnahmevorkehrung zur zusätzlichen Fixierung oder Halterung mindestens eines Antriebs aufweist.

Es kann von Vorteil sein, wenn der in Fahrtrichtung vordere Querträger mindestens eine Aufnahmevorkehrung zur Fixierung oder Halterung mindestens eines Antriebs aufweist.

Es kann vorteilhaft sein, wenn die die Aufnahmevorkehrung des Querträgers im mittleren Bereich des Querträgers angeordnet ist.

Es kann vorteilhaft sein, wenn die Aufnahmevorkehrung des Querträgers auf derjenigen Seite des Querträgers angeordnet ist, die der Rotationsachse des Rades am nächsten ist.

Es kann vorteilhaft sein, wenn die Aufnahmevorkehrung des Querträgers auf derjenigen Seite des Querträgers angeordnet ist, die zum gegenüberliegenden Querträger weist.

Es kann zweckmäßig sein, wenn die Aufnahmevorkehrung des Querträgers mindestens eine Halterung je Antrieb aufweist, wobei die Halterung vorzugsweise schellenartig ausgebildet ist. Diese Schelle kann dann vorteilhaft um den Antrieb bzw., um das Gehäuse des Antriebs zur Halterung desselben gelegt sein.

Es kann vorteilhaft sein, wenn die Aufnahmevorkehrung ein- oder mehrteilig ausgebildet ist. Eine mehrteilige Aufnahmevorkehrung hat den Vorteil, dass zunächst ein Teil der Aufnahmevorkehrung mit dem Achsträger, vorzugsweise dem Längsträger verbunden werden kann, anschließend der Antrieb in diesen Teil der Aufnahmevorkehrung eingesetzt und die Aufnahmevorkehrung schließlich mittels eines oder mehrerer weiterer Teile verschlossen werden kann.

Es kann von Vorteil sein, wenn zumindest ein Teil der Aufnahmevorkehrung zumindest teilweise mit dem Achsträger, vorzugsweise mit dem Längsträger, verbunden ist.

Für bestimmte Einsatzfälle kann es vorteilhaft sein, wenn die Aufnahmevorkehrung oder das Gehäuse des Antriebs zumindest teilweise im und/oder am Achsträger, vorzugsweise im und/oder am Längsträger, oder an der am Längsträger vorhandenen Aufnahmevorkehrung nur durch Kleben befestigt ist. Für gewisse Anwendungsfälle kann es zweckmäßig sein, wenn die Aufnahmevorkehrung oder das Gehäuse des Antriebs zumindest teilweise im und/oder am Achsträger, vorzugsweise im und/oder am Längsträger, oder an der am Längsträger vorhandenen Aufnahmevorkehrung zusätzlich durch Kleben befestigt ist. Für einzelne Gebrauchsfälle kann es vorteilhaft sein, wenn die Aufnahmevorkehrung oder das Gehäuse des Antriebs zumindest teilweise im und/oder am Achsträger, vorzugsweise im und/oder am Längsträger, oder an der am Längsträger vorhandenen Aufnahmevorkehrung nur durch Schweißen, insbesondere durch Widerstandspunktschweißen, befestigt ist. Für bestimmte Anwendungsfälle kann es von Vorteil sein, wenn die Aufnahmevorkehrung oder das Gehäuse des Antriebs zumindest teilweise im und/oder am Achsträger, vorzugsweise im und/oder am Längsträger, oder an der am Längsträger vorhandenen Aufnahmevorkehrung zusätzlich durch Schweißen, insbesondere durch Widerstandspunktschweißen, befestigt ist. Für gewisse Einsatzfälle kann es vorteilhaft sein, wenn die Aufnahmevorkehrung oder das Gehäuse des Antriebs zumindest teilweise im und/oder am Achsträger, vorzugsweise im und/oder am Längsträger, oder an der am Längsträger vorhandenen Aufnahmevorkehrung nur durch Umbördeln vorgegebener Bereiche des Achsträgers befestigt ist. Für weitere Gebrauchsfälle kann es zweckmäßig sein, wenn die Aufnahmevorkehrung oder das Gehäuse des Antriebs zumindest teilweise im und/oder am Achsträger, vorzugsweise im und/oder am Längsträger, oder an der am Längsträger vorhandenen Aufnahmevorkehrung zusätzlich durch Umbördeln vorgegebener Bereiche des Achsträgers befestigt ist. Für bestimmte Gebrauchsfälle kann es vorteilhaft sein, wenn wenigstens die Aufnahmevorkehrung zumindest teilweise oder das Gehäuse des Antriebs zumindest teilweise im und/oder am Achsträger, vorzugsweise im und/oder am Längsträger, oder an der am Längsträger vorhandenen Aufnahmevorkehrung nur durch Durchsetzfügen bzw. insbesondere Clinchen befestigt ist. Für verschiedene Anwendungsfälle kann es vorteilhaft sein, wenn die Aufnahmevorkehrung oder das Gehäuse des Antriebs zumindest teilweise im und/oder am Achsträger, vorzugsweise im und/oder am Längsträger, oder an der am Längsträger vorhandenen Aufnahmevorkehrung zusätzlich durch Durchsetzfügen bzw. insbesondere Clinchen befestigt ist. Für verschiedene Einsatzfälle kann es zweckmäßig sein, wenn die Aufnahmevorkehrung oder das Gehäuse des Antriebs zumindest teilweise im und/oder am Achsträger, vorzugsweise im und/oder am Längsträger, oder an der am Längsträger vorhandenen Aufnahmevorkehrung nur durch Stanznieten befestigt ist. Für verschiedene Gebrauchsfälle kann es zweckmäßig sein, wenn die Aufnahmevorkehrung oder das Gehäuse des Antriebs zumindest teilweise im und/oder am Achsträger, vorzugsweise im und/oder am Längsträger, oder an der am Längsträger vorhandenen Aufnahmevorkehrung zusätzlich durch Stanznieten befestigt ist. Für verschiedene andere Einsatzfälle kann es vorteilhaft sein, wenn die Aufnahmevorkehrung oder das Gehäuse des Antriebs zumindest teilweise im und/oder am Achsträger, vorzugsweise im und/oder am Längsträger, oder an der am Längsträger vorhandenen Aufnahmevorkehrung nur durch Verschrauben befestigt ist. Für weiterhin andere Einsatzfälle kann es vorteilhaft sein, wenn die Aufnahmevorkehrung oder das Gehäuse des Antriebs zumindest teilweise im und/oder am Achsträger, vorzugsweise im und/oder am Längsträger, oder an der am Längsträger vorhandenen Aufnahmevorkehrung zusätzlich durch Verschrauben befestigt ist.

Selbstverständlich ist der vorzugsweise einstückig gegossene Achsträger oder der vorzugsweise einstückig gegossene Längsträger so ausgelegt bzw. weist eine Geometrie im Bereich der aufzunehmenden Aufnahmevorkehrung auf, dass das ausgewählte Verbindungsverfahren ohne weiteres anzuwenden ist. Bei einer am Längsträger vorhandenen flanschartigen Aufnahmevorkehrung kann beispielsweise ein Verschrauben mit dem Antrieb bzw. mit dem Gehäuse des Antriebs vorteilhaft sein.

Es kann von Vorteil sein, wenn zumindest ein Teil der Aufnahmevorkehrung einstückig mit dem Achsträger, vorzugsweise dem Längsträger, ausgebildet ist.

Es kann vorteilhaft sein, wenn wenigstens ein Teil der Aufnahmevorkehrung vorzugsweise unlösbar mit dem Achsträger, vorzugsweise mit dem Längsträger, verbunden ist.

Es kann von Vorteil sein, wenn zumindest ein Teil der Aufnahmevorkehrung zumindest teilweise in dem Achsträger, vorzugsweise in dem Längsträger, aufgenommen, insbesondere integriert ist.

Es kann von Vorteil sein, wenn zumindest ein Teil der Aufnahmevorkehrung zumindest teilweise durch den Achsträger, vorzugsweise durch den Längsträger, gebildet ist.

Dadurch ist der Achsträger, vorzugsweise der Längsträger, samt Aufnahmevorkehrung besonders stabil sowie einfach und kostengünstig herstellbar.

Es kann zweckmäßig sein, wenn die Aufnahmevorkehrung wenigstens einen Teil eines Gehäuses für den Antrieb umfasst und/oder wenn wenigstens ein Teil der Aufnahmevorkehrung als Gehäuse für den Antrieb ausgebildet ist. Vorteilhaft kann die Aufnahmevorkehrung einen Hohlkörper bilden.

Es kann aber auch vorteilhaft sein, wenn die Aufnahmevorkehrung wenigstens mit einem Teil des Gehäuses für den Antrieb verbunden ist.

Es kann zweckmäßig sein, wenn die am Längsträger vorhandene Aufnahmevorkehrung flanschartig, insbesondere ringflanschartig, ausgebildet ist. An einer derart ausgebildeten Aufnahmevorkehrung lässt sich besonders einfach der Antrieb bzw. das Gehäuse des Antriebs anfügen.

Es kann für gewisse Einsatzfälle vorteilhaft sein, wenn wenigstens ein Teil des Gehäuses für den Antrieb zylinderförmig ausgebildet ist. Für bestimmte Einsatzfälle kann es vorteilhaft sein, wenn wenigstens ein Teil des Gehäuses für den Antrieb rohrförmig ausgebildet ist. Für andere Einsatzfälle kann es vorteilhaft sein, wenn wenigstens ein Teil des Gehäuses für den Antrieb hülsenförmig ausgebildet ist, und für wieder andere Einsatzfälle kann es vorteilhaft sein, wenn wenigstens ein Teil des Gehäuses für den Antrieb kastenförmig ausgebildet ist.

Es kann vorteilhaft sein, wenn der Antrieb mehrfach, insbesondere auf einer Seite über die Aufnahmevorkehrung am Längsträger und auf der anderen Seite über die Aufnahmevorkehrung am Querträger, am bzw. im Achsträger gehalten bzw. fixiert ist.

Es kann zweckmäßig sein, wenn die Rotationsachsen von Rad und Antrieb zusammenfallen, also koaxial angeordnet sind.

Für bestimmte Anwendungsfälle kann es von Vorteil sein, wenn die Aufnahmevorkehrung in Fahrzeugquerrichtung gesehen oberhalb der Radmitte angeordnet ist. Für gewisse Anwendungsfälle kann es von Vorteil sein, wenn die Aufnahmevorkehrung in Fahrzeugquerrichtung gesehen unterhalb der Radmitte angeordnet ist. Für einige Anwendungsfälle kann es von Vorteil sein, wenn die Aufnahmevorkehrung in Fahrzeugquerrichtung gesehen auf der Höhe der Radmitte angeordnet ist.

Für bestimmte Einsatzzwecke kann es von Vorteil sein, wenn die Aufnahmevorkehrung in Fahrzeuglängsrichtung gesehen vor der Radmitte angeordnet ist. Für gewisse Einsatzzwecke kann es von Vorteil sein, wenn die Aufnahmevorkehrung in Fahrzeuglängsrichtung gesehen hinter der Radmitte angeordnet ist. Für einige Einsatzzwecke kann es von Vorteil sein, wenn die Aufnahmevorkehrung in Fahrzeuglängsrichtung gesehen auf der Höhe der Radmitte angeordnet ist.
Es kann aber auch von Vorteil sein, wenn die Längsträger und/oder die Aufnahmevorkehrungen eine oder mehrere Bohrungen, Kanäle oder Aussparungen aufweisen, welche Brems- und/oder Kühlleitungen bilden oder durch welche Brems- und/oder Kühlleitungen geführt sind.

Es kann vorteilhaft sein, wenn wenigstens ein Teil der Aufnahmevorkehrung in einem Gießverfahren gefertigt ist.

Es kann zweckmäßig sein, wenn der Achsträger und/oder vorzugsweise der Längsträger zumindest mit einem Teil der Aufnahmevorkehrung als gegossenes Bauteil hergestellt sind.

Es kann zweckmäßig sein, wenn der Achsträger und/oder vorzugsweise der Längsträger zumindest mit einem Teil der Aufnahmevorkehrung als einstückig gegossenes Bauteil hergestellt sind.

Für bestimmte Einsatzfälle kann es von Vorteil sein, wenn wenigstens ein Teil der Aufnahmevorkehrung stoffschlüssig mit dem Achsträger verbunden ist, wobei die Aufnahmevorkehrung vorzugsweise separat hergestellt und im vorzugsweise einstückig gegossenen Achsträger integriert ist. Eine stoffschlüssige Verbindung ist eine Verbindung, bei der die Bauteile, hier insbesondere Achsträger und Aufnahmevorkehrung, so innig miteinander verbunden sind, dass die im Betrieb auftretenden Kräfte durch Kohäsion und Adhäsion übertragen werden. Eine solche Verbindung ist unlösbar, d. h., sie kann nur durch Zerstörung der gefügten Bauteile wieder getrennt oder durch Zerstörung des Verbindungselementes wieder in ihre Bauteile zerlegt werden.

Für verschiedene Anwendungsfälle kann es vorteilhaft sein, wenn die Aufnahmevorkehrung zumindest teilweise im und/oder am Achsträger nur eingegossen ist. Für weitere Anwendungsfälle kann es vorteilhaft sein, wenn die Aufnahmevorkehrung zumindest teilweise im und/oder am Achsträger zusätzlich eingegossen ist.

Für weitere Einsatzfälle kann es vorteilhaft sein, wenn die Aufnahmevorkehrung zumindest teilweise im und/oder am Achsträger nur umgossen ist. Für einzelne Einsatzfälle kann es aber auch vorteilhaft sein, wenn die Aufnahmevorkehrung zumindest teilweise im und/oder am Achsträger zusätzlich umgossen ist.

Für verschiedene Gebrauchsfälle kann es auch vorteilhaft sein, wenn die Aufnahmevorkehrung zumindest teilweise im und/oder am Achsträger nur angegossen ist. Für einzelne Gebrauchsfälle kann es aber auch vorteilhaft sein, wenn die Aufnahmevorkehrung zumindest teilweise im und/oder am Achsträger zusätzlich angegossen ist.

Hierdurch wird insgesamt quasi ein monolithisches Bauteil erhalten, das im Bereich der Aufnahmevorkehrung optimierte Festigkeitswerte aufweist.

Eine Weiterbildung der Erfindung sieht vor, dass der Achsträger ein Vorderachsträger oder ein Hinterachsträger sein kann, wobei in einer bevorzugten Ausbildung dieser Aufnahmen bzw. Ausnehmungen für die Befestigung oder Lagerung von Radführungsgliedern, wie Quer- oder Längslenker, und Aufnahmen zur Befestigung des Achsträgers als vorgefertigte Einheit mitsamt vormontierten Aggregaten am Fahrzeugaufbau aufweist. Weiterhin kann es vorteilhaft sein, wenn der einstückig gegossene Achsträger Aufnahmen bzw. Ausnehmungen vorzugsweise für die Befestigung eines Stabilisators, für die Lagerung einer Drehmomentstütze oder für die Lagerung einer Pendelstütze aufweist. Diese Aufnahmen bzw. Ausnehmungen können durch den Gießprozess einstückig miteinander verbunden sein.

Insgesamt kann das Gewicht bei gleichzeitig höherer Belastbarkeit des Achsträgers verringert werden, wenn wenigstens ein Teil des Achsträgers, vorzugsweise des Längsträgers, und/oder der Aufnahmevorkehrung zumindest teilweise aus einem Leichtbauwerkstoff hergestellt ist. Für bestimmte Anwendungsfälle kann ein Leichtmetall als Leichtmaterial vorteilhaft sein. Für andere Anwendungsfälle kann ein Kunststoff als Leichtmaterial vorteilhaft sein. Für wiederum andere Anwendungsfälle kann ein Verbund aus Leichtmetall und Kunststoff vorteilhaft sein. So kann eine kompaktere Gesamtkonstruktion insbesondere einer antreibbaren Hinterachse mit erfindungsgemäßem Achsträger erhalten werden.

Das Leichtmetall kann aus Aluminium, Magnesium, Zink oder aus Legierungen mit einem oder mehreren dieser Metalle bestehen. Für gewisse Einsatzzwecke können ein oder mehrere Teile des Achsträgers und/oder der Aufnahmevorkehrung vorteilhaft auch aus Stahl- oder Eisen, insbesondere aus Stahl- oder Eisenguss, bestehen. Für bestimmte Einsatzzwecke kann für ein oder mehrere Teile des Achsträgers eine Blechkonstruktion vorteilhaft sein.

Es kann von Vorteil sein, wenn der Kunststoff ein Polyamid, insbesondere ein glasfaserverstärktes Polyamid, ist. Vorteilhaft kann aber auch ein Kunststoff aus Polypropylen, insbesondere glasfaserverstärktem Polypropylen, anwendbar sein. Für bestimmte Einsatzzwecke kann es von Vorteil sein, wenn ein Kunststoff eingesetzt wird, der unter der Bezeichnung Ultramid® A3WG10 CR bekannt ist.

Die über den oder die Querträger miteinander verbundenen Längsträger können vorteilhaft wenigstens teilweise durch Kleben, durch Schweißen, insbesondere durch Widerstandspunktschweißen, durch Umbördeln vorgegebener Bereiche des Achskörpers, durch Durchsetzfügen bzw. insbesondere Clinchen, durch Stanznieten und/oder durch Verschrauben mit dem oder dem Querträgern verbunden sein.

Es kann von Vorteil sein, wenn die Querträger als Profile ausgebildet sind. Es kann vorteilhaft sein, wenn der in Fahrtrichtung vordere Querträger ein Strangpressprofil ist. Es kann vorteilhaft sein, wenn der in Fahrtrichtung hintere Querträger ein vorzugsweise nachbearbeitetes Innen-Hochdruck-Umformteil ist.

Querträger und Längsträger können vorteilhaft ein Hybridleichtbauteil aus Kunststoff und Leichtmetall bilden. Es kann von Vorteil sein, wenn die Längsträger aus Kunststoff und der oder die Querträger aus Leichtmetall bestehen, oder umgekehrt. Die Längsträger können vorteilhaft über ein Spritzgussverfahren mit dem oder den Querträgern verbunden sein. Zweckmäßigerweise können die Längsträger und/oder der oder die Querträger so ausgebildet sein, dass die Verbindung vorzugsweise während des Spritzgussverfahrens durch Formschluss erfolgt.

Es kann von Vorteil sein, wenn der oder die Querträger zumindest teilweise aus einem Leichtmaterial, vorzugsweise aus Leichtmetall, aus Kunststoff oder einem Verbund aus Leichtmetall und Kunststoff hergestellt sind.

Es kann vorteilhaft sein, wenn zumindest ein Teil der Aufnahmevorkehrung ein oder mehrere Verstärkungselemente, insbesondere Verstärkungsrippen, -gurte, - sicken, -wulste, -stege und/oder -durchbrüche, vorzugsweise jedoch mehrere Verstärkungsrippen aufweist.

Zweckmäßigerweise können ein oder mehrere Verstärkungselemente in den Achsträger, vorzugsweise in den Längsträger, übergehen.

Der Antrieb kann vorteilhafterweise ein Antriebsmotor sein. Insbesondere kann es von Vorteil sein, wenn der Antrieb ein Elektromotor ist.

Vorteilhaft weist der Längsträger weiterhin eine insbesondere einstückig mit diesem verbundene, vorzugsweise durch ein Gießverfahren hergestellte Stossdämpferaufnahme zur Befestigung eines Stossdämpfers auf.

Es kann vorteilhaft sein, wenn der Längsträger weiterhin eine insbesondere einstückig mit diesem verbundene, vorzugsweise durch ein Gießverfahren hergestellte Federauflage oder -aufnahme zur Aufnahme einer entsprechenden Feder, insbesondere Schraubenfeder, aufweist.

Diese vorgenannten Aufnahmen können aber je nach Einsatzzweck vorteilhaft auch durch Verschrauben, Verschweißen, Materialabtragung oder dergleichen mit dem Achsträger oder den Lenkern verbunden sein.

Besonders zweckmäßig kann es sein, wenn wenigstens ein Teil der Aufnahmevorkehrung oder ein gegossenes Bauteil des Achsträgers durch Squeeze-Casting, Gegendruck-Kokillenguss (CPC), Druckguss, insbesondere durch Thixo-, Rheo- und Niederdruck-Sandguss, oder durch Schwerkraft-Kokillenguss hergestellt ist.

Es kann auch vorteilhaft sein, wenn wenigstens ein Teil der Aufnahmevorkehrung oder ein gegossenes Bauteil des Achsträgers im Spritzgussverfahren hergestellt ist.

Es kann auch zweckmäßig sein, wenn wenigstens ein Teil der Aufnahmevorkehrung oder ein gegossenes Bauteil des Achsträgers im Sandgussverfahren hergestellt ist.

Es kann vorteilhaft sein, wenn der Achsträger Teil einer angetriebenen Hinterachse, insbesondere einer angetriebenen Mehrlenkerhinterachse, eines zwei- oder mehrachsigen Kraftfahrzeugs ist. Es kann dabei vorteilhaft sein, wenn die Mehrlenkerhinterachse als Schwertlenkerhinterachse ausgebildet ist. Vorteilhaft kann die Mehrlenkeraufhängung mit einem Längs- und drei Querlenkern ausgebildet ist. Somit lässt sich auf einfache Weise insbesondere ein Allradantrieb realisieren, wobei die Vorderachse im Gegensatz zur vorgenannten Hinterachse beispielsweise mit Hilfe eines Verbrennungsmotors angetrieben sein kann. Vorteilhaft lässt sich der erfindungsgemäße Achsträger in einem Elektrofahrzeug oder einem Hybridfahrzeug verwenden. Als Hybridfahrzeug ist ein Fahrzeug mit herkömmlichen Vorderachsantrieb und erfindungsgemäßen Hinterachsantrieb bevorzugt.

Es kann vorteilhaft sein, wenn der vorzugsweise einstückig gegossene Achsträger, die vorzugsweise einstückig gegossenen Längsträger und/oder der oder die vorzugsweise einstückig gegossenen Querträger Aufnahmen bzw. Ausnehmungen für die Befestigung oder Lagerung von Radführungsgliedern, wie Quer- oder Längslenker, und Aufnahmen zur Befestigung des Achsträgers als vorgefertigte Einheit mitsamt vormontierten Aggregaten am Fahrzeugaufbau aufweist. Weiterhin kann es vorteilhaft sein, wenn der vorzugsweise einstückig gegossene Achsträger, die vorzugsweise einstückig gegossenen Längsträger und/oder der oder die vorzugsweise einstückig gegossenen Querträger Aufnahmen bzw. Ausnehmungen vorzugsweise für die Befestigung eines Stabilisators, für die Lagerung einer Drehmomentstütze und/oder für die Lagerung einer Pendelstütze aufweisen. Diese Aufnahmen bzw. Ausnehmungen können durch den Gießprozess einstückig miteinander verbunden sein.

Der Achsträger, vorzugsweise der Längsträger, kann vorteilhaft zusammen mit wenigstens einem Teil der Aufnahmevorkehrung im Gießverfahren hergestellt sein. Für bestimmte Einsatzzwecke kann es auch zweckmäßig sein, wenn die der Längsträger aus einem oder mehreren Spritzguss-, Strangpress-, Strangguss- oder Gussprofilen hergestellt ist. Für gewisse Anwendungsfälle kann es vorteilhaft sein, wenn wenigstens ein Teil der Aufnahmevorkehrung aus wenigstens einem Spritzguss-, Strangpress-, Strangguss oder Gussprofil hergestellt ist.

Der oder die Querträger des Achsträgers können vorteilhaft aus einem Spritzguss- , Strangpress-, Strangguss- oder Gussprofil hergestellt sein.

Die Aufnahmevorkehrung kann vorteilhaft beabstandet von dem oder den Querträgern, vorzugsweise zwischen den Querträgern, am Längsträger angeordnet sein.

Es kann vorteilhaft sein, wenn der Achsträger Aufnahmen, vorzugsweise in Form einer Buchse, für Befestigungsmittel zur Befestigung des Achsträgers am Fahrzeugaufbau angeordnet sein.

Es kann vorteilhaft sein, wenn die Längsachse oder Symmetrieachse der Aufnahmevorkehrung parallel zur Rotationsachse der Räder angeordnet ist oder mit dieser zusammenfällt.

Es kann vorteilhaft sein, wenn die am Längsträger vorhandene Aufnahmevorkehrung radnah angeordnet ist.

Es kann vorteilhaft sein, wenn ausgehend von der Verbindungsstelle zwischen Aufnahmevorkehrung und Achsträger der größte Teil der Aufnahmevorkehrung oder des Gehäuses des Antriebs nach innen gerichtet, also vom entsprechend antreibbaren Rad weg weisend, angeordnet ist.

Für bestimmte Anwendungen kann es vorteilhaft sein, wenn die Längsachse der Aufnahmevorkehrung in Fahrzeugquerrichtung gesehen oberhalb des Achsträgers oder des Längsträgers angeordnet ist. Für einige Anwendungen kann es vorteilhaft sein, wenn die Längsachse der Aufnahmevorkehrung in Fahrzeugquerrichtung gesehen unterhalb des Achsträgers oder des Längsträgers angeordnet ist. Für viele Anwendungen kann es vorteilhaft sein, wenn die Längsachse der Aufnahmevorkehrung in Fahrzeugquerrichtung gesehen auf der Höhe des Achsträgers oder des Längsträgers angeordnet ist.

Es kann vorteilhaft sein, wenn die Aufnahmevorkehrung für den Antrieb oder des Gehäuses für den Antrieb ein Volumen von 500 cm³ bis 2000 cm³ aufweist.

Es kann vorteilhaft sein, wenn das Durchmesser/Länge-Verhältnis der Aufnahmevorkehrung oder des Gehäuses für den Antrieb zwischen 0,25:1 und 1,5:1 beträgt.

Es kann zweckmäßig sein, wenn der Längsträger zumindest einige der nachfolgenden Aufnahmen aufweist, die vorzugsweise einstückig mit dem Längsträger verbunden sind:
- Aufnahmen zur Lagerung eines oberen Querlenkers, insbesondere eines Sturzlenkers
- Aufnahmen zur Lagerung eines unteren Querlenkers, insbesondere einer Spurstange
- Aufnahmen zur Lagerung eines Stabilisators
- Aufnahmen, vorzugsweise endseitig angeordnet, zur Befestigung des Achsträgers an der Karosserie bzw. am Aufbau

Weitere Einzelheiten und vorteilhafte Ausgestaltungen der Erfindung ergeben sich aus der nachfolgenden Beschreibung in Verbindung mit der Zeichnung. In dieser zeigen
- Fig. 1: schematisch einen ersten Hinterachsträger mit erfindungsgemäß angeordneter Aufnahmevorkehrung in A) perspektivischer Ansicht und B) in Unteransicht,
- Fig. 2: schematisch einen zweiten Hinterachsträger mit erfindungsgemäß angeordneter Aufnahmevorkehrung in A) perspektivischer Ansicht und B) in Unteransicht,
- Fig. 3: schematisch einen dritten Hinterachsträger mit erfindungsgemäß angeordneter Aufnahmevorkehrung in A) perspektivischer Ansicht und B) in Unteransicht,
- Fig. 4: schematisch einen vierten Hinterachsträger mit erfindungsgemäß angeordneter Aufnahmevorkehrung in A) perspektivischer Ansicht von schräg oben, in B) perspektivischer Ansicht von schräg unten und C) in Draufsicht,
- Fig. 5: einen Längsträger des erfindungsgemäßen Hinterachsträgers nach Fig. 4
- Fig. 6: den erfindungsgemäßen Hinterachsträger nach Fig. 4 in Unteransicht mit daran angeordneten Aggregaten und
- Fig. 7: einen Teilausschnitt aus dem erfindungsgemäßen Hinterachsträger nach Fig. 4 in perspektivischer Ansicht mit daran angeordneten Aggregaten.

Um Wiederholungen zu vermeiden, werden in den Figuren gleiche Bezugszeichen verwendet, sofern diese gleiche Bauteile bezeichnen. Die Fahrzeuglängsrichtung des Kraftfahrzeugs ist durch einen Pfeil FL, und die Fahrzeugquerrichtung durch einen Pfeil FQ dargestellt.

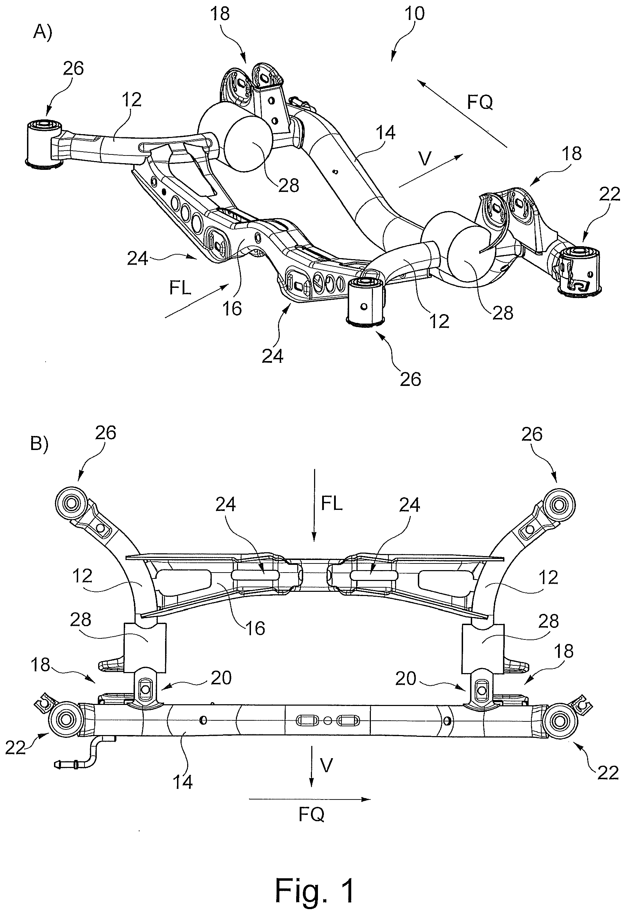

Der in den Fig. 1 bis 3 dargestellte Achsträger 10 weist zwei sich im wesentlichen in Fahrzeuglängsrichtung FL erstreckende Längsträger 12 sowie einen ersten Querträger 14 und einen zweiten Querträger 16 auf. Die beiden Querträger 14 und 16 verbinden die Längsträger 12 in Fahrzeugquerrichtung FQ. Bei dem dargestellten Ausführungsbeispiel eines Achsträgers 10 liegt der erste Querträger 14 bezogen auf die Vorwärtsfahrtrichtung V vor dem zweiten Querträger 16.

Die Längsträger 12 weisen jeweils im Bereich ihrer Anbindungsstellen an den ersten Querträger 14 eine vorzugsweise einstückig mit dem Längsträger 12 verbundene, oben liegende Aufnahme 18 für einen hier nicht dargestellten oberen Querlenker auf.

Eine vorzugsweise einstückig mit dem Längsträger 12 verbundene darunterliegende Lagerstelle 20 dient der Befestigung eines hier nicht dargestellten unteren Querlenkers bzw. eines hier nicht dargestellten Stabilisators.

An dem in Vorwärtsfahrtrichtung V vorne liegenden Querträger 14 sind im Endbereich vorzugsweise einstückig mit dem Querträger 14 verbundene Anbindungsstellen 22 zur Befestigung des Achsträgers 10 am hier nicht dargestellten Fahrzeugaufbau vorgesehen.

Der Achsträger 10 umfasst weiterhin den bereits erwähnten zweiten Querträger 16, der sich zwischen den beiden Längsträgern 12 erstreckt.

An dem zweiten Querträger 16 befinden sich ebenfalls vorzugsweise einstückig mit dem Querträger 16 verbundene Lagerstellen 24 für Radführungslenker. Diese Lagerstellen 24 sind in einem Mittelabschnitt angeordnet und dienen der Anbindung eines hier nicht dargestellten nach unten wegschwenkbaren Lenkers.

Nach hinten wird der Achsträger 10 durch zwei weitere Anbindungsstellen 26 für die Befestigung am Fahrzeugaufbau abgeschlossen. Diese sind vorzugsweise jeweils einstückig in einem Endabschnitt eines Längsträgers 12 integriert.

Der in den Fig. 1 bis 3 dargestellte Achsträger 10 weist in Fahrzeuglängsrichtung FL gesehen jeweils auf der Höhe des hier nicht dargestellten Rades eine mit dem Längsträger 12 verbundene radnahe Aufnahmevorkehrung 28 für einen hier nicht dargestellten Antrieb, der vorzugsweise einen Elektromotor umfasst, auf, wobei der Antrieb mit dem entsprechende Rad über eine Antriebswelle, die je nach Ausbildung und Anordnung der Aufnahmevorkehrung einen Knickwinkel aufweisen kann, in Wirkverbindung steht. Jedes Rad wird von einem hier nicht dargestellten Radträger getragen, der über die vorgenannten Querlenker mit der Achsträger 10 verbunden ist. Der Radträger ist zudem mit einem hier nicht dargestellten Längslenker bzw. Schwert in Längsrichtung drehbar mit dem Fahrzeugaufbau verbunden.

Die in den Fig. 1 bis 3 dargestellten Aufnahmevorkehrungen 28 unterscheiden sich in ihrem Durchmesser/Länge-Verhältnis in Abhängigkeit von ihrer Anordnung am bzw. im Längsträger 12. Die dargestellten Aufnahmevorkehrungen 28 weisen jeweils ein zylinderförmiges Gehäuse auf, in das der Antrieb jedes Rades aufgenommen ist.

Jedes der Räder der den erfindungsgemäßen Achsträger 10 aufweisenden Mehrlenkerhinterachse wird durch einen einzelnen Elektromotor angetrieben. Vorzugsweise ist jedes der einzeln angetriebenen Räder hierbei gesondert ansteuerbar, wodurch unterschiedliche Antriebskräfte übertragbar sind und sich ein elektronischen Stabilitätsprogramm sowie Fahrdynamikregelungen realisieren lassen. Vorteilhaft können wenigstens einzelne der Aufnahmen 18, 20, 22, 24 und 26 in dem erfindungsgemäßen Achsträger 10 durch Gießen einstückig miteinander verbunden sein.

Gemäß Fig. 1 bis 3 weist der Achsträger 10 erfindungsgemäß Aufnahmevorkehrungen 28 auf, die vorzugsweise jeweils einstückig mit dem Achsträger 10 oder zumindest mit den Längsträgern 12 vorzugsweise durch Gießen hergestellt sind.

Die Aufnahmevorkehrungen 28 umfassen jeweils einen zylinderförmigen bzw. rohrartigen, quer zur Fahrzeuglängsrichtung FL angeordneten Hohlkörper, in dem ein Radantrieb angeordnet ist.

Erfindungsgemäß ist es auch möglich, dass die Aufnahmevorkehrungen 28 oder Teile davon, insbesondere der rohrartige Hohlkörper, in eine Gießform in einer vorgegebenen Position eingelegt werden. Anschließend erfolgt das Gießen des einstückig gegossenen Achsträgers 10 oder des einstückig gegossenen Längsträgers 12, derart, dass der rohrartige Hohlkörper der Aufnahmevorkehrung 28 im Achsträger 12 ein-, angegossen und/oder umgossen ist.

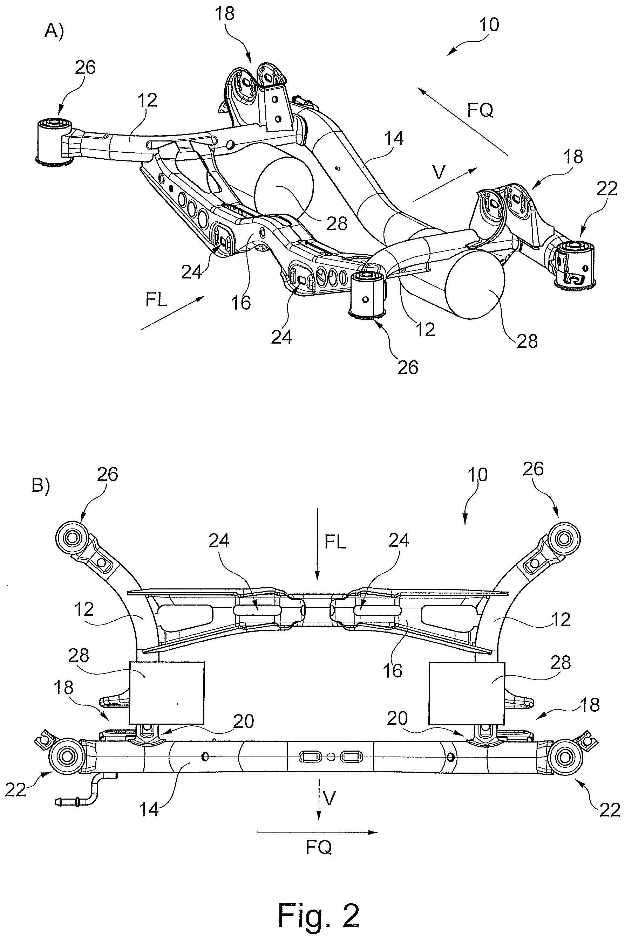

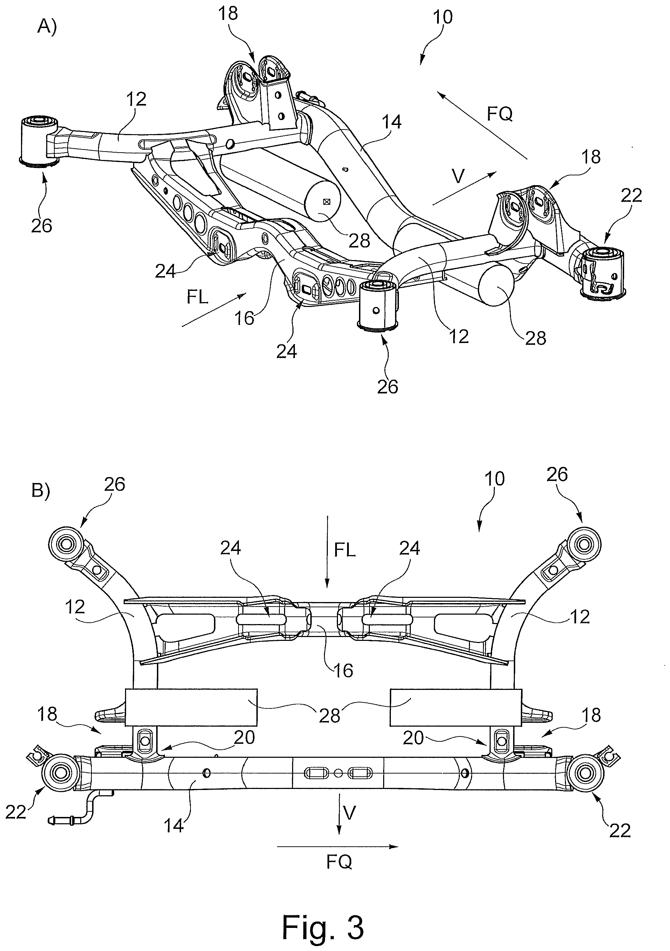

Die in Fig. 1 dargestellte erste Variante zeigt vorliegend eine Aufnahmevorkehrung 28, deren Längsachse in Fahrzeugsquerrichtung FQ gesehen auf der Höhe des Längsträgers 12 angeordnet ist. Die derart angeordnete Aufnahmevorkehrung 28 ist im Vergleich zu den in den Fig. 2 und 3 dargestellten Aufnahmevorkehrungen 28 in Längsrichtung relativ kurz ausgebildet und benötigt vorteilhaft kaum eine Bauraumanpassung. Dadurch bedingt weist die Aufnahmevorkehrung 28 ein vergleichsweise geringes Volumen auf, macht aber gegebenenfalls die Verwendung sehr kurzer Antriebswellen mit großem Knickwinkel erforderlich.

Die in Fig. 2 dargestellte zweite Variante zeigt eine Aufnahmevorkehrung 28, deren Längsachse in Fahrzeugsquerrichtung gesehen etwas unterhalb der Höhe des Längsträgers 12 angeordnet ist. Die derart angeordnete Aufnahmevorkehrung 28 ist einerseits im Vergleich zu der in Fig. 1 dargestellten Aufnahmevorkehrung 28 in Längsrichtung länger und im Durchmesser größer sowie andererseits im Vergleich zu der in Fig. 3 dargestellten Aufnahmevorkehrung 28 in Längsrichtung kürzer und im Durchmesser kleiner ausgebildet. Dadurch bedingt weist diese Aufnahmevorkehrung 28 ein vergleichsweise großes Volumen auf, wobei die Eignung zur Aufnahme eines gängigen Antriebs besonders günstig ist.

Die in Fig. 3 dargestellte dritte Variante zeigt eine Aufnahmevorkehrung 28, deren Längsachse in Fahrzeugsquerrichtung gesehen noch weiter unterhalb der Höhe des Längsträgers 12 angeordnet ist. Die derart angeordnete Aufnahmevorkehrung 28 ist im Vergleich zu den in Fig. 1 und 2 dargestellten Aufnahmevorkehrungen 28 in Längsrichtung länger und im Durchmesser kleiner ausgebildet. Dadurch bedingt weist diese Aufnahmevorkehrung 28 ein vergleichsweise mittleres Volumen auf, welches durch eine Verlängerung der Aufnahmevorkehrung 28 aber noch erhöht werden kann.

Die Erfindung ist nicht auf das Ausführungsbeispiel beschränkt, sondern im Rahmen der Offenbarung vielfach variabel. Alle neuen, in der Beschreibung und/oder Zeichnung offenbarten Einzel- und Kombinationsmerkmale können erfindungswesentlich sein.

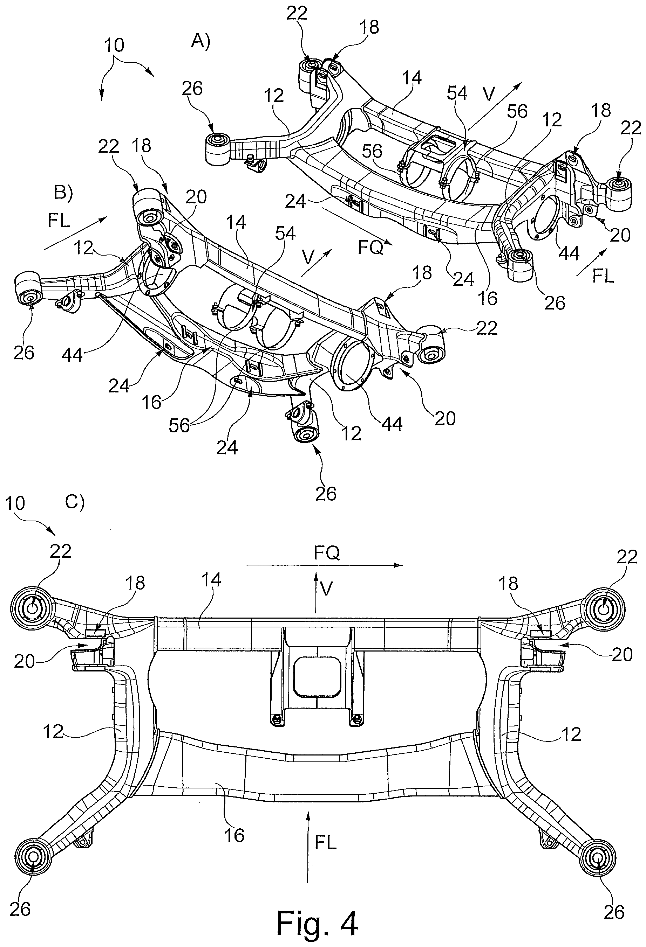

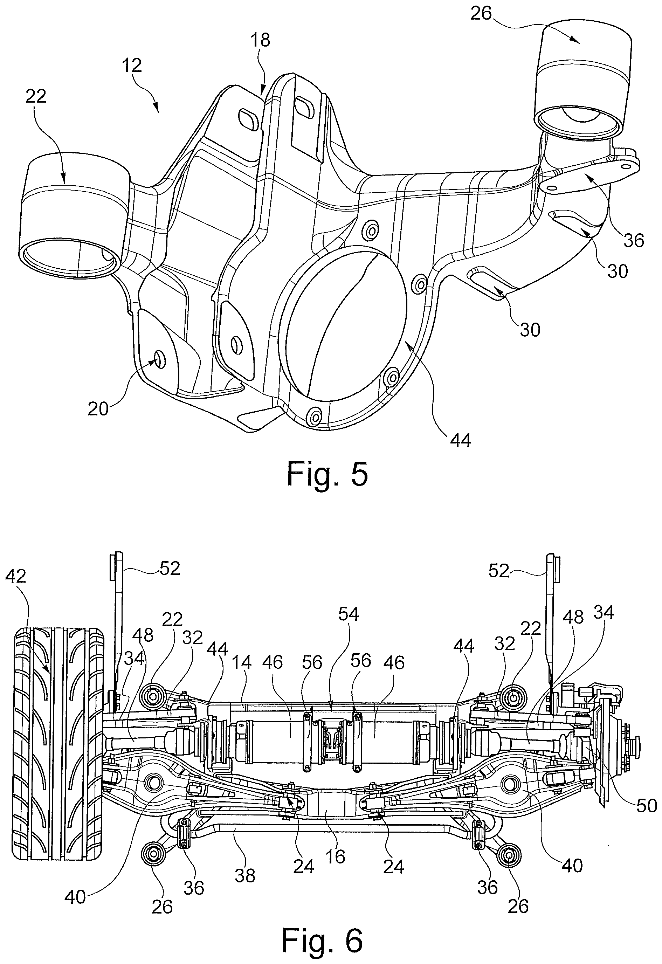

Der in den Fig. 4 sowie 6 und 7 dargestellte Achsträger 10 weist zwei sich im wesentlichen in Fahrzeuglängsrichtung FL erstreckende Längsträger 12 sowie einen ersten Querträger 14 und einen zweiten Querträger 16 auf. Die Längsträger 12 können erfindungsgemäß die in Fig. 5 dargestellte Ausgestaltung haben. Die beiden Querträger 14 und 16 verbinden die Längsträger 12 in Fahrzeugquerrichtung FQ. Bei dem dargestellten Ausführungsbeispiel eines vierten erfindungsgemäßen Achsträgers 10 liegt der erste Querträger 14 bezogen auf die Vorwärtsfahrtrichtung V vor dem zweiten Querträger 16.

Die Längsträger 12 sind vorzugsweise einstückig gegossene Bauteile, welche vorzugsweise aus Leichtmetall, insbesondere aus Aluminium bzw. einer Aluminiumlegierung, und ganz bevorzugt im Sandguss-Verfahren hergestellt sind. Der erste Querträger 14 ist als Profilteil, vorzugsweise als Strangpressprofil, insbesondere aus leicht gebogenem Leichmetall, insbesondere aus Aluminium bzw. einer Aluminiumlegierung, ausgebildet. Der zweite Querträger 16 ist als Profilteil, vorzugsweise als Innen-Hochdruck-Umformteil, insbesondere aus Leichmetall, insbesondere aus Aluminium bzw. einer Aluminiumlegierung, ausgebildet, wobei das Innen-Hochdruck-Umformteil vorteilhaft nachbearbeitet sein kann.

Die Längsträger 12 und Querträger 14, 16 sind vorzugsweise miteinander verschweißt, wobei an den Längsträgern 12 vorteilhaft Aufnahmen, beispielsweise in Form von Hülsenstummeln, zur Aufnahme der Querträger 14, 16 vorgesehen sein können. Anstelle der vorgenannten Aufnahmen können aber auch an vorgegebenen Positionen Schweißnahtvorbereitungen 30 am Längsträger 12 vorgesehen sein.

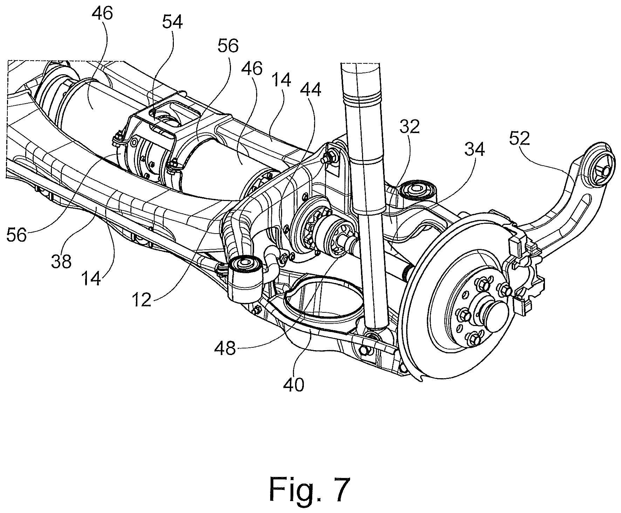

Die erfindungsgemäßen Längsträger 12 des vierten erfindungsgemäßen Achsträgers 10 weisen jeweils etwa in Bereich ihrer Anbindungsstellen an den ersten Querträger 14 eine vorzugsweise einstückig mit dem Längsträger 12 verbundene, oben liegende Aufnahme 18 für einen Lenker, insbesondere den in den Fig. 6 und 7 dargestellten Querlenker oder Sturzlenker 32 auf.

Eine vorzugsweise einstückig mit dem Längsträger 12 verbundene darunter liegende Lagerstelle 20 dient der Befestigung eines weiteren Lenkers, insbesondere eines Querlenkers oder einer Spurstange 34, wie sie beispielsweise in den Fig. 6 und 7 dargestellt ist.

Weiterhin kann der Längsträger 12 vorteilhaft noch eine Aufnahme 36 zur Lagerung bzw. Befestigung eines Stabilisators 38 aufweisen, wie er beispielsweise in den Fig. 6 und 7 dargestellt ist. Die Aufnahme 36 zur Lagerung bzw. Befestigung eines Stabilisators 38 kann vorteilhaft auf der Unterseite des Längsträgers 12, vorzugsweise im Bereich der am Längsträger 12 hinten angeordneten Anbindungsstelle 26 für die Befestigung am Fahrzeugaufbau vorgesehen sein.

An dem in Vorwärtsfahrtrichtung V vorne liegenden Endbereich des Längsträgers 12 kann vorteilhaft eine vorzugsweise einstückig mit dem Längsträger 12 verbundene Anbindungsstelle 22 zur Befestigung des Achsträgers 10 am hier nicht dargestellten Fahrzeugaufbau vorgesehen sein.

Der Achsträger 10 umfasst weiterhin den bereits erwähnten zweiten Querträger 16, der sich zwischen den beiden Längsträgern 12 erstreckt.

An dem zweiten Querträger 16 befinden sich vorzugsweise einstückig mit dem Querträger 16 verbundene Lagerstellen 24 für Radführungslenker, insbesondere die in den Fig. 6 und 7 dargestellten Federlenker 40. Diese Lagerstellen 24 sind in einem Mittelabschnitt des Querträgers 16 angeordnet und dienen der Anbindung eines nach unten wegschwenkbaren Lenkers 40.

Nach hinten wird der erfindungsgemäße vierte Achsträger 10 durch zwei weitere Anbindungsstellen 26 für die Befestigung am Fahrzeugaufbau abgeschlossen. Diese sind vorzugsweise jeweils einstückig in einem Endabschnitt eines Längsträgers 12 integriert.

Der in den Fig. 4 sowie 6 und 7 dargestellte Achsträger 10 bzw. der in Fig. 5 dargestellte Längsträger 12 weist in Fahrzeuglängsrichtung FL gesehen jeweils etwa auf der Höhe des Rades 42 eine mit dem Längsträger 12 vorzugsweise einstückig verbundene radnahe Aufnahmevorkehrung 44 für einen Antrieb 46, der vorzugsweise einen Elektromotor umfasst, auf, wobei der Antrieb 46 mit dem entsprechenden Rad 42 über eine Antriebswelle 48, die je nach Ausbildung und Anordnung der Aufnahmevorkehrung 44 einen Knickwinkel aufweisen kann, in Wirkverbindung steht. Jedes Rad 42 wird von einem Radträger 50 getragen, der über die vorgenannten Lenker bzw. Querlenker 32, 34 oder 40 mit dem Achsträger 10 verbunden ist. Der Radträger 50 ist zudem mit einem Längslenker bzw. Schwert 52 in Längsrichtung drehbar mit dem Fahrzeugaufbau verbunden.

Bei der in den Fig. 4 bis 7 dargestellten Aufnahmevorkehrung 44 handelt es sich vorteilhaft um eine Art Ringflansch, an dem der Antrieb 46 befestigt bzw. aufgenommen ist. Hierzu ist vorteilhaft das Gehäuse des Antriebs derart mit der Aufnahmevorkehrung 44 verbunden, insbesondere verschraubt, dass die Antriebswelle des Antriebs 46 durch die Öffnung des Ringflansches führt. Vorteilhaft sind Ringflansch und Rad 42 im Wesentlichen parallel zueinander angeordnet. Eine solche flanschartige, im Längsträger 12 integrierte Aufnahmevorkehrung 44 gewährleistet die Abstützung des Antriebsmoments.

Die dargestellte Aufnahmevorkehrung 44 ist also mit der einen Seite des zylinderförmigen Gehäuses des Antriebs 46 verbunden. Die andere Seite des Antriebsgehäuses ist ebenfalls am erfindungsgemäßen vierten Achsträger 10 fixiert. Hierzu kann am ersten Querträger 14 eine weitere Aufnahmevorkehrung 54 für den Antrieb 46 vorgesehen sein. Diese Aufnahmevorkehrung 54 ist vorzugsweise im mittleren Bereich des ersten Querträgers 14 angeordnet. Hierbei kann es sich vorteilhaft um eine Schweißkonstruktion handeln, vorzugsweise aus einem Leichtmetall, insbesondere aus Aluminium oder einer Aluminiumlegierung. Die an dem ersten Querträger 14 angeschweißte Konstruktion kann vorteilhaft aus einem oder mehreren gebogenen Profilen, insbesondere Blechen, zusammengesetzt sein. Vorteilhaft weist die Konstruktion eine Schelle 56 oder dergleichen auf, mit der das dem Rad 42 abgewandte Ende des Antriebs 46 bzw. Antriebgehäuses fixierbar ist.

Jedes der Räder 42 der den erfindungsgemäßen Achsträger 10 aufweisenden Mehrlenkerhinterachse wird durch einen einzelnen Antrieb 46 bzw. Elektromotor angetrieben. Vorzugsweise ist jedes der einzeln angetriebenen Räder 42 hierbei gesondert ansteuerbar, wodurch unterschiedliche Antriebskräfte übertragbar sind und sich ein elektronischen Stabilitätsprogramm sowie Fahrdynamikregelungen realisieren lassen.

Vorteilhaft können wenigstens einzelne der Aufnahmen 18, 20, 22, 26 und 36 in dem erfindungsgemäßen Längsträger 12 durch Gießen, insbesondere im Sandguss-Verfahren, einstückig miteinander verbunden sein.

Gemäß Fig. 4 bis 7 weist der Längsträger 12 erfindungsgemäß eine Aufnahmevorkehrung 44 auf, die vorzugsweise einstückig mit dem Längsträger 12 durch Gießen, insbesondere im Sandguss-Verfahren, hergestellt ist. Die Aufnahmevorkehrung 44 weist einen ringartigen, quer zur Fahrzeuglängsrichtung FL angeordneten Flansch auf, in dem der Radantrieb 46 angeordnet bzw. mit dem der Radantrieb 46 verbunden ist.

Der in Fig. 6 und 7 dargestellte, mit der Aufnahmevorkehrung 44 und der Aufnahmevorkehrung 54 verbundene Antrieb 46 ist vorteilhaft in einem rohrartigen Gehäuse angeordnet, dessen Längsachse in Fahrzeugsquerrichtung FQ gesehen etwas unterhalb der Höhe des Längsträgers 12 bzw. der Rotationsachse des Rades 42 angeordnet ist.

Der Antrieb 46 kann vorteilhaft ein wassergekühlter, so genannter High-Speed Synchronmotor sein, dem zum Rad 42 ein Planetengetriebe vorgeschaltet sein kann. Eine durch den Ringflansch der Aufnahmevorkehrung 44 geführte Antriebswelle 48 steht mit Kugel-Festgelenken und Schiebeausgleich mit dem Rad 42 in Wirkverbindung.

## Patentansprüche

1. Achsträger (10) für eine Mehrlenkeraufhängung der Räder (42) eines Kraftfahrzeugs, wobei der Achsträger zwei Längsträger (12) umfasst, die über wenigstens einen Querträger (16) miteinander verbunden sind, **dadurch gekennzeichnet, dass** an jedem Längsträger je ein flanschartiger Teil einer Aufnahmevorkehrung (44) für die Befestigung eines oder je eines als Gehäuse ausgebildeten Teils einer Aufnahmevorkehrung (28) für einen Antriebsmotor für jedes der Räder angeordnet ist, wobei der Längsträger mit dem flanschartigen Teil der Aufnahmevorkehrung (44) als einstückig gegossenes Bauteil ausgebildet und zumindest teilweise durch den Längsträger gebildet ist, wobei ausgehend vom flanschartigen Teil der Aufnahmevorkehrung (44) der daran zu befestigende als Gehäuse ausgebildete Teil der Aufnahmevorkehrung (28) nach innen gerichtet, also vom entsprechend angetriebenen Rad weg zum gegenüberliegenden Längsträger weisend, angeordnet ist.

2. Achsträger nach Anspruch 1, **dadurch gekennzeichnet, dass** die zwei Längsträger (12) über zwei Querträger (16) zur Ausbildung eines rahmenartigen Achsträgers (10) verbunden sind.

3. Achsträger nach Anspruch 1 oder 2, **dadurch gekennzeichnet, dass** zumindest ein Querträger (14) mindestens eine Aufnahmevorkehrung (54) zur Fixierung oder Halterung des als Gehäuse ausgebildete Teils der Aufnahmevorkehrung (54) aufweist.

4. Achsträger nach einem der Ansprüche 1 bis 3, **dadurch gekennzeichnet, dass** der in Fahrtrichtung vordere Querträger (16) mindestens eine Aufnahmevorkehrung zur Fixierung oder Halterung des als Gehäuse ausgebildete Teils der Aufnahmevorkehrung aufweist.

5. Achsträger nach Anspruch 3 oder 4, **dadurch gekennzeichnet, dass** die Aufnahmevorkerung (54) im mittleren Bereich des Querträgers (14,16) angeordnet ist.

6. Achsträger nach einem der Ansprüche 3 bis 5, **dadurch gekennzeichnet, dass** die Aufnahmevorkehrung (54) auf derjenigen Seite des Querträgers (14, 16) angeordnet ist, die der Rotationsachse des Rades am nächsten ist.

7. Achsträger nach einem der Ansprüche 3 bis 6, **dadurch gekennzeichnet, dass** die Aufnahmevorkehrung (54) auf derjenigen Seite des Querträgers (14, 16) angeordnet ist, die zu einem gegenüberliegenden Querträger (14, 16) weist.

8. Achsträger nach einem der Ansprüche 3 bis 7, **dadurch gekennzeichnet, dass** die Aufnahmevorkehrung (54) mindestens eine Halterung (56) für jeden als Gehäuse ausgebildeten Teil der Aufnahmevorkehrung aufweist, wobei die Halterung (56) vorzugsweise schellenartig ausgebildet ist.

9. Achsträger nach einem der Ansprüche 1 bis 8, **dadurch gekennzeichnet, dass** der als Gehäuse ausgebildete Teil der Aufnahmevorkehrung (28, 44, 54) zylinder-, rohr-, hülsen- oder kastenförmig ausgebildet ist.

10. Achsträger nach einem der Ansprüche 1 bis 9, **dadurch gekennzeichnet, dass** der der als Gehäuse ausgebildete Teil der Aufnahmevorkehrung mehrfach, insbesondere auf einer Seite über den flanschartigen Teil der Aufnahmevorkehrung am Längsträger und auf der anderen Seite über die Aufnahmevorkehrung (28, 44, 54) am Querträger, am bzw. im Achsträger (10) gehalten bzw. fixiert ist.

11. Achsträger nach einem der Ansprüche 1 bis 10, **dadurch gekennzeichnet, dass** der Achsträger, der Längsträger, der flanschartige Teil der Aufnahmevorkehrung (44) und/oder der als Gehäuse ausgebildete Teil der Aufnahmevorkehrung (28) zumindest teilweise aus einem Leichtmaterial hergestellt sind.

12. Achsträger nach einem der Ansprüche 1 bis 11, **dadurch gekennzeichnet, dass** der flanschartige Teil der Aufnahmevorkehrung (44) und/oder der als Gehäuse ausgebildete Teil der Aufnahmevorkehrung (28) ein oder mehrere Verstärkungselemente, insbesondere Verstärkungsrippen, -gurte, -sicken, -wulste, -stege und/oder -durchbrüche, vorzugsweise jedoch mehrere Verstärkungsrippen aufweist.

13. Achsträger nach einem der Ansprüche 1 bis 12, **dadurch gekennzeichnet, dass** der als Gehäuse ausgebildete Teil der Aufnahmevorkehrung (28) mehrteilig ausgebildet ist, vorzugsweise derart, dass der als Gehäuse ausgebildete Teil der Aufnahmevorkehrung (28) mit einem Deckel verschließbar ist.

14. Achsträger nach einem der Ansprüche 1 bis 13, **dadurch gekennzeichnet, dass** der flanschartige Teil der Aufnahmevorkehrung (44) nach Art eines Ringflansches ausgebildet ist.

15. Achsträger nach einem der Ansprüche 1 bis 14, **dadurch gekennzeichnet, dass** der flanschartige Teil der Aufnahmevorkehrung (44) eine Öffnung aufweist, derart, dass eine Antriebswelle des Antriebsmotors durch diese Öffnung führbar ist.

## Claims

1. Axle support (10) for a multi-link suspension of the wheels (42) of a motor vehicle, wherein the axle support comprises two longitudinal members (12), which are connected to one another by means of at least one transverse member (16), **characterized in that**, on each longitudinal member, there is arranged in each case one flange-like part of a receiving provision (44) for the fastening of a or of in each case one part, which is formed as a casing, of a receiving provision (28) for a drive motor for each of the wheels, wherein the longitudinal member is formed as an integrally cast component with the flange-like part of the receiving provision (44) and is formed at least partially by the longitudinal member, wherein, proceeding from the flange-like part of the receiving provision (44), that part of the receiving provision (28) which is to be fastened thereto and which is formed as a casing is arranged so as to be directed inward, that is to say so as to point away from the correspondingly driven wheel towards the oppositely situated longitudinal member.

2. Axle support according to Claim 1, **characterized in that** the two longitudinal members (12) are connected by means of two transverse members (16) so as to form a frame-like axle support (10).

3. Axle support according to Claim 1 or 2, **characterized in that** at least one transverse member (14) has at least one receiving provision (54) for fixing or holding that part of the receiving provision (54) which is formed as a casing.

4. Axle support according to any of Claims 1 to 3, **characterized in that** the front transverse member (16) in a direction of travel has at least one receiving provision for fixing or holding that part of the receiving provision which is formed as a casing.

5. Axle support according to Claim 3 or 4, **characterized in that** the receiving provision (54) is arranged in the central region of the transverse member (14, 16).

6. Axle support according to any of Claims 3 to 5, **characterized in that** the receiving provision (54) is arranged on that side of the transverse member (14, 16) which is closest to the axis of rotation of the wheel.

7. Axle support according to any of Claims 3 to 6, **characterized in that** the receiving provision (54) is arranged on that side of the transverse member (14, 16) which points towards an oppositely situated transverse member (14, 16).

8. Axle support according to any of Claims 3 to 7, **characterized in that** the receiving provision (54) has at least one holder (56) for each part, which is formed as a casing, of the receiving provision, wherein the holder (56) is preferably formed in the manner of a clamp.

9. Axle support according to any of Claims 1 to 8, **characterized in that** that part of the receiving provision (28, 44, 54) which is formed as a casing is of cylindrical, tubular, sleeve-shaped or box-shaped form.

10. Axle support according to any of Claims 1 to 9, **characterized in that** that part of the receiving provision which is formed as a casing is held or fixed on or in the axle support (10) at multiple points, in particular on one side by means of the flange-like part of the receiving provision on the longitudinal member and on the other side by means of the receiving provision (28, 44, 54) on the transverse member.

11. Axle support according to any of Claims 1 to 10, **characterized in that** the axle support, the longitudinal member, the flange-like part of the receiving provision (44) and/or that part of the receiving provision (28) which is formed as a casing are produced at least partially from a lightweight material.

12. Axle support according to any of Claims 1 to 11, **characterized in that** the flange-like part of the receiving provision (44) and/or that part of the receiving provision (28) which is formed as a casing has one or more reinforcement elements, in particular reinforcement ribs, straps, corrugations, beads, webs and/or apertures, but preferably multiple reinforcement ribs.

13. Axle support according to any of Claims 1 to 12, **characterized in that** that part of the receiving provision (28) which is formed as a casing is of multipart form, preferably such that that part of the receiving provision (28) which is formed as a casing can be closed by means of a cover.

14. Axle support according to any of Claims 1 to 13, **characterized in that** the flange-like part of the receiving provision (44) is formed in the manner of an annular flange.

15. Axle support according to any of Claims 1 to 14, **characterized in that** the flange-like part of the receiving provision (44) has an opening, such that a drive shaft of the drive motor can be led through said opening.

## Revendications

1. Support d'essieu (10) pour une suspension multibras des roues (42) d'un véhicule automobile, le support d'essieu comprenant deux longerons (12) qui sont reliés l'un à l'autre par le biais d'au moins une traverse (16), **caractérisé en ce qu'**au niveau de chaque longeron est disposée à chaque fois une partie de type bride d'un dispositif de réception (44) pour la fixation d'une ou de chaque partie, réalisée sous forme de boîtier, d'un dispositif de réception (28) pour un moteur d'entraînement pour chacune des roues, le longeron avec la partie de type bride du dispositif de réception (44) étant réalisé sous forme de composant coulé d'une seule pièce et étant formé au moins en partie par le longeron, à partir de la partie de type bride du dispositif de réception (44), la partie du dispositif de réception (28) réalisée en tant que boîtier et devant être fixée à celle-ci étant disposée de manière orientée vers l'intérieur, c'est-à-dire étant disposée de manière tournée vers le longeron opposé à l'écart de la roue entraînée de manière correspondante.

2. Support d'essieu selon la revendication 1, **caractérisé en ce que** les deux longerons (12) sont reliés par le biais de deux traverses (16) pour réaliser un support d'essieu (10) en forme de cadre.

3. Support d'essieu selon la revendication 1 ou 2, **caractérisé en ce qu'**au moins une traverse (14) présente au moins un dispositif de réception (54) pour fixer ou retenir la partie du dispositif de réception (54) réalisée en tant que boîtier.

4. Support d'essieu selon l'une quelconque des revendications 1 à 3, **caractérisé en ce que** la traverse (16) avant dans la direction de conduite présente au moins un dispositif de réception pour fixer ou retenir la partie du dispositif de réception réalisée sous forme de boîtier.

5. Support d'essieu selon la revendication 3 ou 4, **caractérisé en ce que** le dispositif de réception (54) est disposé dans la région centrale de la traverse (14, 16).

6. Support d'essieu selon l'une quelconque des revendications 3 à 5, **caractérisé en ce que** le dispositif de réception (54) est disposé sur le côté de la traverse (14, 16) qui est le plus près de l'axe de rotation de la roue.

7. Support d'essieu selon l'une quelconque des revendications 3 à 6, **caractérisé en ce que** le dispositif de réception (54) est disposé sur le côté de la traverse (14, 16) qui est tourné vers une traverse opposée (14, 16).

8. Support d'essieu selon l'une quelconque des revendications 3 à 7, **caractérisé en ce que** le dispositif de réception (54) présente au moins une fixation (56) pour chaque partie du dispositif de réception réalisée sous forme de boîtier, la fixation (56) étant réalisée de préférence sous forme de collier de serrage.

9. Support d'essieu selon l'une quelconque des revendications 1 à 8, **caractérisé en ce que** la partie du dispositif de réception (28, 44, 54) réalisée sous forme de boîtier est réalisée sous forme cylindrique, tubulaire, en forme de douille ou en forme de caisson.

10. Support d'essieu selon l'une quelconque des revendications 1 à 9, **caractérisé en ce que** la partie du dispositif de réception réalisée sous forme de boîtier est retenue ou fixée plusieurs fois, en particulier d'un côté par le biais de la partie du dispositif de réception de type bride au niveau du longeron et de l'autre côté par le biais du dispositif de réception (28, 44, 54) au niveau de la traverse, sur ou dans le support d'essieu (10) .

11. Support d'essieu selon l'une quelconque des revendications 1 à 10, **caractérisé en ce que** le support d'essieu, le longeron, la partie de type bride du dispositif de réception (44) et/ou la partie du dispositif de réception (28) réalisée sous forme de boîtier sont fabriqués au moins en partie en matériau léger.

12. Support d'essieu selon l'une quelconque des revendications 1 à 11, **caractérisé en ce que** la partie de type bride du dispositif de réception (44) et/ou la partie du dispositif de réception (28) réalisée sous forme de boîtier présentent un ou plusieurs éléments de renforcement, en particulier des ailettes, ceintures, moulures, bourrelets, nervures et/ou orifices de renforcement, de préférence toutefois plusieurs ailettes de renforcement.

13. Support d'essieu selon l'une quelconque des revendications 1 à 12, **caractérisé en ce que** la partie du dispositif de réception (28) réalisée sous forme de boîtier est réalisée en plusieurs parties, de préférence de telle sorte que la partie du dispositif de réception (28) réalisée sous forme de boîtier puisse être fermée avec un couvercle.

14. Support d'essieu selon l'une quelconque des revendications 1 à 13, **caractérisé en ce que** la partie de type bride du dispositif de réception (44) est réalisée à la manière d'une bride annulaire.

15. Support d'essieu selon l'une quelconque des revendications 1 à 14, **caractérisé en ce que** la partie de type bride du dispositif de réception (44) présente une ouverture, de telle sorte qu'un arbre d'entraînement du moteur d'entraînement puisse être guidé à travers cette ouverture.
